(19) Europäisches Patentamt / European Patent Office / Office européen des brevets

(11) **EP 4 474 161 A1**

(12) **EUROPEAN PATENT APPLICATION**

(43) Date of publication:
**11.12.2024 Bulletin 2024/50**

(21) Application number: **24179465.0**

(22) Date of filing: **03.06.2024**

(51) International Patent Classification (IPC):
**B41J 13/00** (2006.01)   **B41J 13/02** (2006.01)
**B65H 29/12** (2006.01)   **G03G 15/00** (2006.01)
**B41J 11/00** (2006.01)

(52) Cooperative Patent Classification (CPC):
**B41J 13/0036; B41J 13/02; B65H 29/125;**
**G03G 15/50;** B41J 11/0095; G03G 2215/00945

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2023   JP 2023092508**

(71) Applicant: **CANON KABUSHIKI KAISHA**
**Tokyo 146-8501 (JP)**

(72) Inventors:
• **KOMATSU, Ryota**
**Tokyo (JP)**

• **ITO, Masashi**
**Tokyo (JP)**
• **TAGUCHI, Motoyuki**
**Tokyo (JP)**
• **TAKAHASHI, Sho**
**Tokyo (JP)**
• **ARITA, Keisuke**
**Tokyo (JP)**
• **TAMARI, Kento**
**Tokyo (JP)**

(74) Representative: **WESER & Kollegen**
**Patentanwälte PartmbB**
**Radeckestraße 43**
**81245 München (DE)**

(54) **PRINTING APPARATUS, CONTROL METHOD FOR PRINTING APPARATUS, AND PROGRAM**

(57)    A printing apparatus, a control method for the printing apparatus, and a program that can eliminate an overlapping state and suppress deterioration of alignment performance for discharged sheets are to be provided. Therefore, the appropriate distance (Dp) at the completion of separating is set, and, in the separating operation, based on the distance (Dp), the overlapping state of the printing medium (1P) and the printing medium (2P) is eliminated by adjusting the conveyance speed of the downstream roller conveying the preceding printing medium (1P) and the conveyance speed of the upstream roller conveying the following printing media (2P). Thereafter, the conveyance speed of the downstream roller is decelerated.

FIG.7

EP 4 474 161 A1

## Description

BACKGROUND OF THE INVENTION

Field of the Invention

The present invention relates to a printing apparatus, a control method for a printing apparatus, and a program.

Description of the Related Art

Regarding printing apparatuses in recent years, there has been a need for high-speed processing in which the interval of sheets being conveyed is made as close as possible so that the number of sheets on which images can be formed per unit of time is increased as much as possible. Furthermore, in order to implement high-speed image formation, a printing apparatus that continuously conveys sheets in a state where the trailing edge of a preceding sheet and the leading edge of a following sheet are partially overlapping with each other has been provided. Japanese Patent Laid-Open No. H6-56299 discloses a method of discharging sheets after increasing the conveyance speed of the preceding sheet to separate the preceding sheet from the following sheet in order to eliminate the overlapping state after image formation.

However, with the configuration of Japanese Patent Laid-Open No. H6-56299, since sheets are discharged at high speed while being separated, the alignment performance in discharging into a discharge tray may be deteriorated.

SUMMARY OF THE INVENTION

Thus, the present invention improves the alignment performance for discharged sheets in a printing apparatus that continuously conveys sheets.

The present invention in its first aspect provides a printing apparatus as in claims 1 to 17.

The present invention in its second aspect provides a control method for a printing apparatus as in claim 18.

The present invention in its third aspect provides a program as in claim 19.

According to the present invention, it is possible to provide a printing apparatus, a control method for a printing apparatus, and a program that can suppress deterioration of the alignment performance for discharged sheets.

Further features of the present invention will become apparent from the following description of exemplary embodiments with reference to the attached drawings.

BRIEF DESCRIPTION OF THE DRAWINGS

Fig. 1A is a side view of the main parts of a printing apparatus to which a present embodiment can be applied;
Fig. 1B is a side view of the main parts of the printing apparatus to which a present embodiment can be applied;
Fig. 1C is a side view of the main parts of the printing apparatus to which a present embodiment can be applied;
Fig. 2 is a block diagram illustrating the printing apparatus;
Fig. 3A is a series of diagrams illustrating conveyance steps of printing media in the printing apparatus in step order;
Fig. 3B is a series of diagrams illustrating conveyance steps of printing media in the printing apparatus in step order;
Fig. 3C is a series of diagrams illustrating conveyance steps of printing media in the printing apparatus in step order;
Fig. 4A is a series of diagrams illustrating conveyance steps of printing media in the printing apparatus in step order;
Fig. 4B is a series of diagrams illustrating conveyance steps of printing media in the printing apparatus in step order;
Fig. 5A is a series of diagrams illustrating conveyance steps of printing media in the printing apparatus in step order;
Fig. 5B is a series of diagrams illustrating conveyance steps of printing media in the printing apparatus in step order;
Fig. 5C is a series of diagrams illustrating conveyance steps of printing media in the printing apparatus in step order;
Fig. 5D is a series of diagrams illustrating conveyance steps of printing media in the printing apparatus in step order;
Fig. 6A is a series of diagrams illustrating conveyance steps of printing media in the printing apparatus in step order;
Fig. 6B is a series of diagrams illustrating conveyance steps of printing media in the printing apparatus in step order;
Fig. 6C is a series of diagrams illustrating conveyance steps of printing media in the printing apparatus in step order;
Fig. 7 is a flowchart illustrating a separating operation;
Fig. 8 is a diagram illustrating a timing chart;
Fig. 9A is a series of diagrams illustrating conveyance steps of printing media in the printing apparatus in step order;
Fig. 9B is a series of diagrams illustrating conveyance steps of printing media in the printing apparatus in step order;
Fig. 9C is a series of diagrams illustrating conveyance steps of printing media in the printing apparatus in step order;

Fig. 10A is a series of diagrams illustrating conveyance steps of printing media in the printing apparatus in step order;

Fig. 10B is a series of diagrams illustrating conveyance steps of printing media in the printing apparatus in step order;

Fig. 11A is a series of diagrams illustrating conveyance steps of printing media in the printing apparatus in step order;

Fig. 11B is a series of diagrams illustrating conveyance steps of printing media in the printing apparatus in step order;

Fig. 11C is a series of diagrams illustrating conveyance steps of printing media in the printing apparatus in step order;

Fig. 12A is a series of diagrams illustrating conveyance steps of printing media in the printing apparatus in step order;

Fig. 12B is a series of diagrams illustrating conveyance steps of printing media in the printing apparatus in step order;

Fig. 12C is a series of diagrams illustrating conveyance steps of printing media in the printing apparatus in step order;

Fig. 13A is a series of diagrams illustrating conveyance steps of printing media in the printing apparatus in step order;

Fig. 13B is a series of diagrams illustrating conveyance steps of printing media in the printing apparatus in step order; and

Fig. 13C is a series of diagrams illustrating conveyance steps of printing media in the printing apparatus in step order.

DESCRIPTION OF THE EMBODIMENTS

(First Embodiment)

Hereinafter, the first embodiment of the present invention is explained with reference to the drawings.

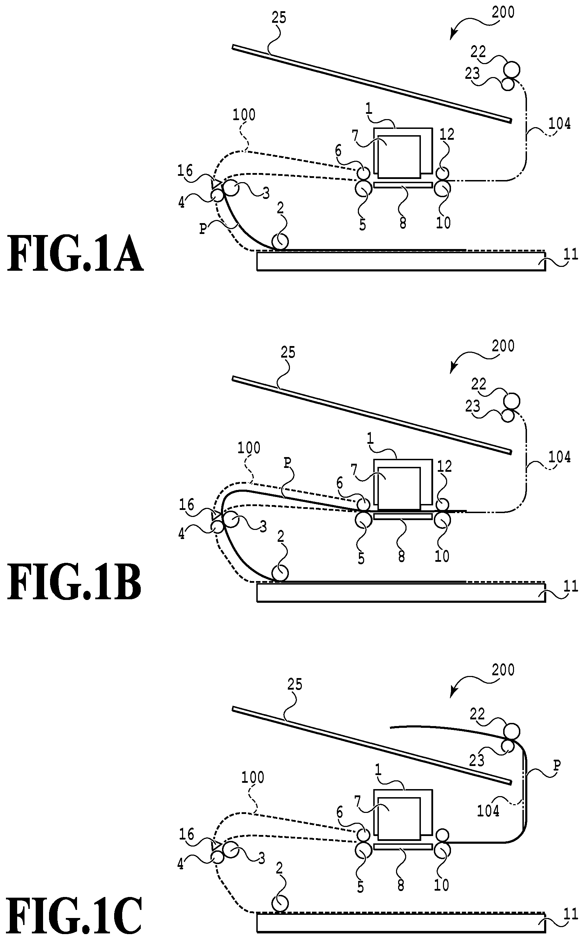

Fig. 1A to Fig. 1C are side views illustrating the main parts of the printing apparatus 200 to which the present embodiment can be applied. The schematic configuration of the printing apparatus 200 in the present embodiment is explained using Fig. 1A to Fig. 1C. The printing apparatus 200 loads multiple sheets (hereinafter referred to as "printing media") P in the printing paper loading part 11. The pickup roller 2 abuts on the top printing medium P loaded in the printing paper loading part 11 to pick up the printing medium P. The feeder roller 3 feeds the printing medium P picked up by the pickup roller 2 along the first conveyance path 100 in the conveyance direction. The pickup roller 2, which is a one-way roller, stops after conveying the printing medium P to a position beyond the feeder roller 3. Even if the pickup roller 2 is stopped, the feeder roller 3 can continue conveying the printing medium P. The feeding driven roller 4 is biased to the feeder roller 3 and, together with the feeder roller 3, nips and feeds the printing medium P.

The first conveyance roller 5 conveys the printing medium P fed by the feeder roller 3 and feeding driven roller 4 to a position facing the printing head (printing part) 7. The first conveyance driven roller 6 is biased to the conveyance roller 5 and, together with the first conveyance roller 5, nips and conveys the printing medium P. Between the feeding nip part formed by the feeder roller 3 and feeding driven roller 4 and the conveyance nip part formed by the conveyance roller 5 and the first conveyance driven roller 6, the printing medium P is guided by a guide in the first conveyance path 100. The printing medium detecting sensor 16 detects the leading edge and trailing edge of the printing medium P being conveyed. The printing medium detecting sensor 16 is arranged downstream relative to the feeder roller 3 in the printing media conveyance direction (see Fig. 1A).

The printing head 7 performs printing on the first plane (front surface) of the printing medium P conveyed by the conveyance roller 5 and the first conveyance driven roller 6. In the present embodiment, the printing head 7 is explained as an inkjet type printing head that performs printing on the printing medium P by ejecting ink. The platen 8 supports the second plane (back surface) of the printing medium P at a position facing the printing head 7. The carriage 1 moves in a direction intersecting the printing media conveyance direction with the printing head 7 mounted thereon. The second conveyance roller 10 conveys the printing media P on which printing has been performed by the printing head 7 toward the conveyance direction. The second conveyance driven roller 12 is biased to the second conveyance roller 10 and, together with the second conveyance roller 10, nips and conveys the printing media P (see Fig. 1B).

The printing medium P conveyed by the second conveyance roller 10 is conveyed along a guide in the discharge path 104. The discharge roller 22 discharges the printing medium P conveyed by the second conveyance roller 10 to the discharge tray 25. The discharge driven roller 23 is biased to the discharge roller 22 and, together with the discharge roller 22, nips and conveys the printing medium P (see Fig. 1C).

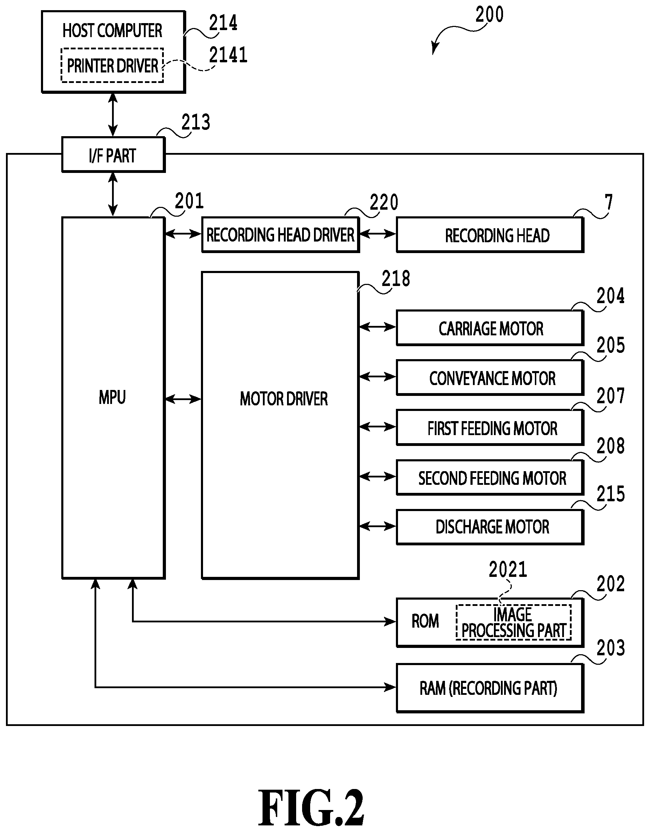

Fig. 2 is a block diagram illustrating the printing apparatus 200 of the present embodiment. The MPU201 controls operations of each part and data processing. The ROM 202 is equipped with the image processing part 2021 and stores programs and data to be executed by MPU 201. The RAM 203 temporarily stores processing data to be executed by the MPU 201 and data received from the host computer 214. The printing head 7 is controlled by the printing head driver 220. The carriage motor 204 drives the carriage 1. The conveyance motor 205 drives the first conveyance roller 5 and the second conveyance roller 10. The first feeding motor 207 drives the pickup roller 2. The second feeding motor 208 drives the feeder roller. The discharge motor 215 drives the discharge roller 22. The motor driver 218 controls the various motors described above.

The host computer 214 is equipped with the printer driver 2141 for compiling printing information, such as images to be recorded and image quality for printing, and communicating with the printing apparatus in a case where the user commands the execution of a printing operation. The MPU 201 executes the exchange of image data for printing and the like with the host computer 214 via the I/F part 213.

The printing apparatus 200 overlaps (partially overlaps) the leading edge of the following printing medium P on the trailing edge of the preceding printing medium P for conveyance. In such conveyance above, if printing paper in the overlapping state is discharged in a face-down system (with the printing surface facing down), the order of the printing paper may be switched during discharging, which may deteriorate the alignment performance in discharging.

In Patent Document 1, in order to eliminate the overlapping state for discharging, the conveyance speed during discharging is made faster than during printing, so that the printing medium is discharged after being separated from the following printing medium. However, if discharging is performed at a faster conveyance speed in the separating operation, the alignment performance in discharging may deteriorate.

Therefore, in the present embodiment, after the separating operation is performed, the conveyance speed in discharging of the preceding printing medium is reduced from the separation speed, thereby preventing deterioration of the alignment performance in discharging. The method is hereinafter explained.

In the present embodiment, the printing operation by the printing head 7 is performed on the preceding printing medium 1P with the following printing medium P overlapping by a predetermined amount. After the printing operation to the printing medium 1P is completed, the separating operation to the printing medium 1P is initiated. Note that the overlapping state, in which the leading edge of the following printing medium 2P overlaps with the trailing edge of the preceding printing medium 1P, is formed between the feeder roller 3 and the first conveyance roller 5.

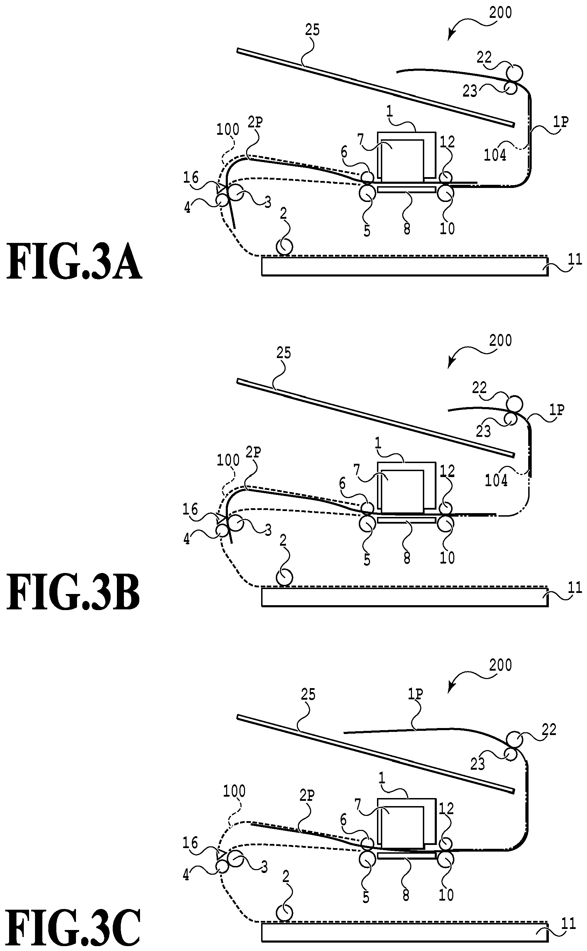

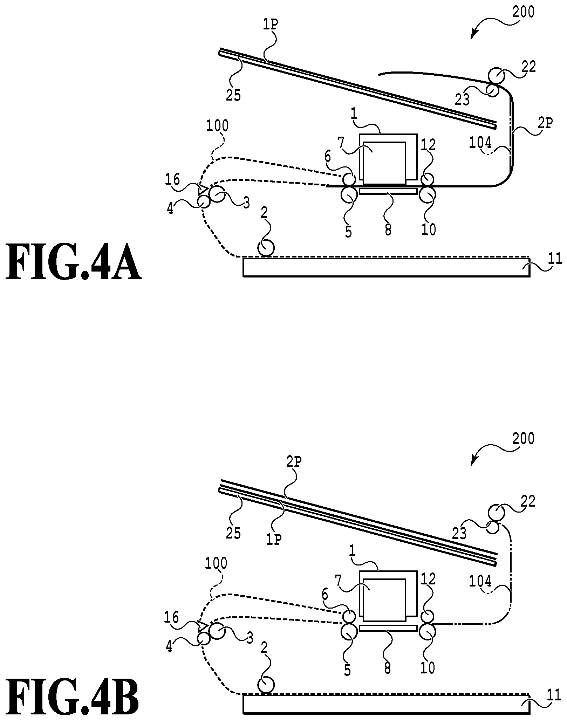

Fig. 3A to Fig. 3C and Fig. 4A and Fig. 4B are a series of diagrams illustrating the conveyance steps after the separating operation in step order. Hereinafter, an explanation is given of the conveyance steps after the separating operation in the printing apparatus 200 of the present embodiment.

Fig. 3A illustrates the state in which the upstream end of the preceding printing medium 1P in the conveyance direction has reached the second conveyance roller 10 and the preceding printing medium 1P and the following printing medium 2P overlap with each other. In the present embodiment, this is the point in time where the separating operation (separation) is initiated. The MPU 201 can recognize that the upstream end of the preceding printing medium 1P in the conveyance direction has reached the second conveyance roller 10, based on the length of the printing paper and the rotation amount of the first conveyance roller 5 from the point in time where the printing medium detecting sensor 16 detects the printing medium 1P. Thereafter, independently from the first conveyance roller 5 and the second conveyance roller 10, the discharge roller 22 is continuously rotated by the discharge motor 215 to perform the separating operation. At this time, the speed of the discharge roller 22 is controlled so that the overlap amount between the downstream side of the following printing medium 2P in the conveyance direction and the upstream side of the preceding printing medium 1P in the conveyance direction gradually decreases. Specifically, the MPU 201 drives the discharge motor 215 so that the conveyance speed of the discharge roller 22 is made faster than the conveyance speed of the first conveyance roller 5 and the second conveyance roller 10. Accordingly, the overlap amount between the printing medium 1P and the printing medium 2P gradually decreases, and eventually the two will be separated. Note that, in Fig. 3A to Fig. 3C, printing is performed on the printing medium 2P by the printing head 7.

Hereinafter, an explanation is given with reference to Fig. 3B and Fig. 3C. Fig. 3B illustrates the state in which the separating of the preceding printing medium 1P and the following printing medium 2P from each other has been completed, and Fig. 3C illustrates the state at the time the upstream end of the preceding printing medium 1P in the conveyance direction has reached the discharge roller 22. Upon completing the separating of the preceding printing medium 1P and the following printing medium 2P, the MPU 201 reduces the conveyance speed of the discharge roller 22. Specifically, the MPU 201 drives the discharge motor 215 so that the conveyance speed of the discharge roller 22 is made slower than the conveyance speed of the first and second conveyance rollers. Therefore, the interval between the preceding printing medium 1P and the following printing medium 2P becomes narrower during the time from the completion of the separating, which is illustrated in Fig. 3B, until the upstream end of the preceding printing medium 1P in the conveyance direction reaches the discharge roller 22, which is illustrated in Fig. 3C. At this time, if the following printing medium 2P catches up with the preceding printing medium 1P, the printing medium 1P and the printing medium 2P may collide with each other, which results in a jam.

Therefore, in the present embodiment, the rotation speed of the discharge roller 22 is controlled so that the distance between the preceding printing medium 1P and the following printing medium 2P is made greater than 0 at the time the upstream end of the preceding printing medium 1P in the conveyance direction reaches the discharge roller 22. Accordingly, it is possible to reduce the conveyance speed of the preceding printing medium 1P to a suitable speed during discharging, with the overlap between the preceding printing medium 1P and the following printing medium 2P eliminated.

Thereafter, as in Fig. 4A, the printing media 1P on which printing has been finished is discharged to the discharge tray 25, which is arranged above the printing part, by the rotation of the discharge roller 22. Further, if the image forming operation for the last line of the following printing medium 2P is finished, printing has been finished for the printing medium 2P, which is the last printing medium in one job in the present example. At this time, the printing medium 2P is discharged to the discharge tray 25 by rotating the discharge roller 22, the second conveyance roller 10, and the first conveyance roller 5 (see Fig. 4B).

By controlling the conveyance of the printing media in this manner, the printing media can be discharged with the printing medium 1P and the printing medium 2P not overlapping with each other and at an appropriate discharge speed that does not disrupt the alignment performance in discharging. Accordingly, it is possible to prevent deterioration of alignment performance in discharging.

Hereinafter, a more specific explanation is given of the conveyance control of the printing media in the present embodiment. Note that the descriptions "upstream" and "downstream" used in the following explanation indicate being upstream in the conveyance direction and being downstream in the conveyance direction, unless otherwise explained.

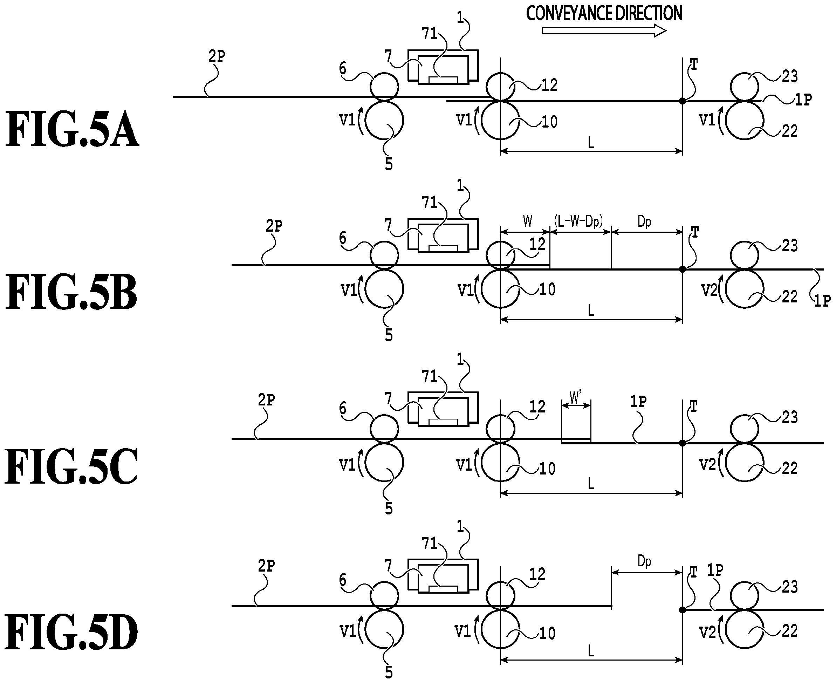

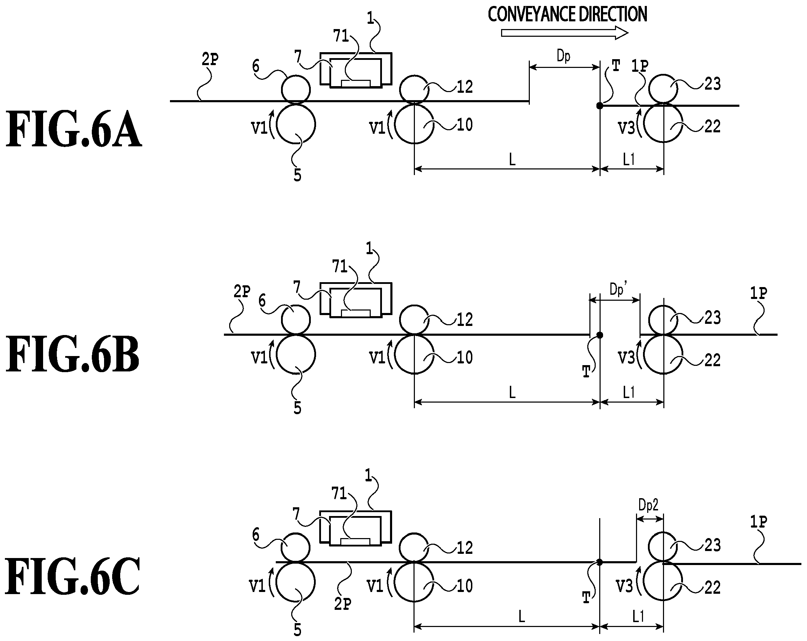

Fig. 5A to Fig. 5D are a series of diagrams illustrating the conveyance steps in the operation of separating the printing media P in the printing apparatus 200 of the present embodiment in step order. Fig. 6A to Fig. 6D are a series of diagrams illustrating the conveyance steps after the operation of separating the printing media P in the printing apparatus 200 of the present embodiment in step order. For ease of understanding, the conveyance path of the printing media is illustrated as a straight line. Hereinafter, an explanation is given of the conveyance steps in the printing apparatus 200 of the present embodiment.

Fig. 5A illustrates the state at the point in time where the downstream end of the following printing medium 2P has reached the second conveyance roller 10 after the printing on the preceding printing medium 1P is finished. At this point in time, the separating operation for the printing medium 1P and the printing medium 2P (hereinafter simply referred to as "separating operation") has not yet been initiated. Thereafter, as in Fig. 5B, once the upstream end of the preceding printing medium 1P reaches the second conveyance roller 10 and the nip by the second conveyance roller is released, the separating operation is initiated. Note that the timing for starting the separating operation is not limited to immediately after reaching the second conveyance roller 10, but can be any time after reaching it. The separating operation is performed until the upstream end of the preceding printing medium 1P reaches the point T (the separation finishing point), which is a given predetermined position on the upstream side relative to the discharge roller 22. In the present embodiment, the point T is set within the section between the second conveyance roller 10 and the discharge roller 22.

Note that the area from the second conveyance roller 10 to the point T is the separation area, and the distance thereof is L. Further, the distance Dp is the interval between the upstream end of the preceding printing medium 1P and the downstream end of the following printing medium 2P at the time the upstream end of the preceding printing medium 1P reaches the point T, that is, immediately after the separating operation is completed (corresponding to Fig. 5D). Further, the distance W is the distance from the second conveyance roller 10 to the downstream end of the following printing medium 2P at the time the upstream end of the preceding printing medium 1P reaches the second conveyance roller 10 (corresponding to Fig. 5B). This distance W is also the amount by which the printing medium 1P and the printing medium 2P overlap with each other (overlap amount) at the time the separating operation is initiated.

The preceding printing medium 1P is conveyed at the separation speed V2 until, as in Fig. 5C and Fig. 5D, the upstream end of the preceding printing medium 1P reaches the point T where the separating is finished after the separating operation is initiated. In the present embodiment, an explanation is given of a case as in Fig. 6A where the conveyance speed of the discharge roller 22 is reduced from V2 to V3 immediately after the upstream end of the preceding printing medium 1P reaches the point T where the separating is finished. Note that the timing for decelerating the conveyance speed is not limited to immediately after the upstream end of the preceding printing medium 1P reaches the point T, but can be any time after reaching it.

Once the upstream end of the preceding printing medium 1P reaches the point T where the separating is finished and the conveyance speed of the discharge roller 22 is reduced, the interval between the preceding printing medium 1P and the following printing medium 2P shortens from the distance Dp to the distance Dp' as illustrated in Fig. 6B. The appropriate distance Dp is secured at the completion of the separating operation in Fig. 5D so that the predetermined distance Dp2 is secured as the interval between the printing medium 1P and the printing medium 2P at the time the upstream end of the preceding printing medium 1P reaches the discharge roller 22 as illustrated in Fig. 6C.

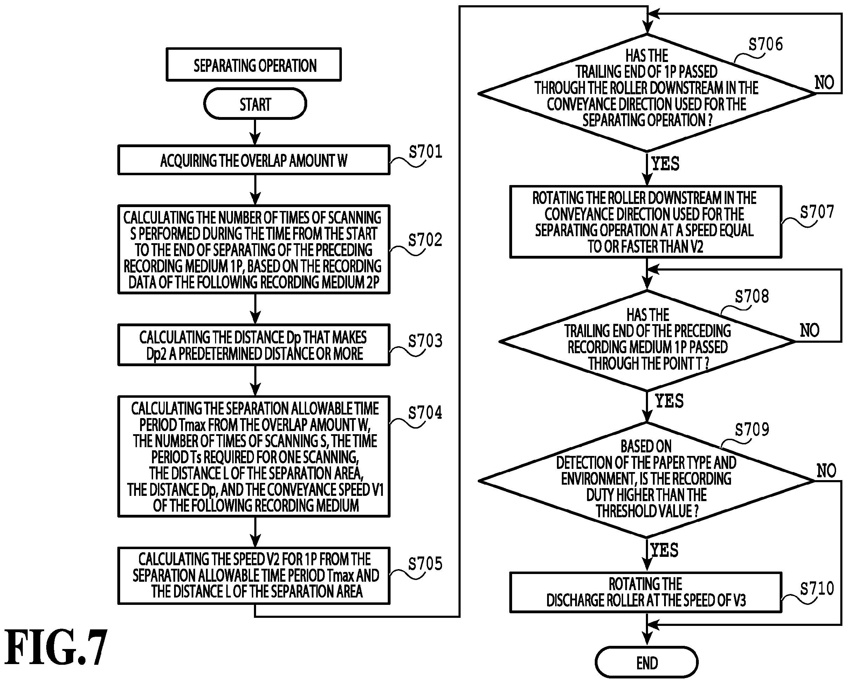

Given that condition, the MPU 201 controls the speed of the discharge roller 22 during the separating operation. Note that $0 < Dp2 < Dp$ is true as the relationship of the distances between the preceding printing medium 1P and the following printing medium 2P. The details of how the distance Dp is calculated and how the speed of the discharge roller 22 is calculated are explained with reference to the control flow of Fig. 7.

Fig. 7 is a flowchart illustrating the separating operation in the present embodiment. Hereinafter, the separating operation in the present embodiment is explained using the flowchart of Fig. 7. Note that the series of processes illustrated in Fig. 7 is performed by the MPU 201 of the printing apparatus 200 loading a program code stored in the ROM 202 into the RAM 203 and executing it. Alternatively, a part or all of the functions in the steps of Fig. 7 may be implemented by hardware such as an ASIC or an electronic circuit. Note that the symbol "S" in the explanation of each process indicates that it is a step of the flowchart.

The MPU 201 acquires the overlap amount W in S701 once the upstream end of the preceding printing medium 1P reaches the second conveyance roller 10, the nip by the second conveyance roller 10 is released, and the separating operation is initiated. The overlap amount W is a fixed value predetermined based on the type of printing media, etc. Thereafter, in S702, the MPU 201 calculates the actual number of times of scanning S performed during the separating operation while the upstream end of the printing medium 1P advances from the start of the separating operation (Fig. 5B) to the end of the separating operation (Fig. 5D), based on the printing data to be recorded on the following printing medium 2P.

Next, in S703, the MPU 201 calculates the distance Dp between the upstream end of the printing medium 1P and the downstream end of the printing medium 2P, which can be calculated at the point in time where the upstream end of the preceding printing medium 1P reaches the point T where the separating is finished (corresponding to Fig. 5D).

Specifically, it is assumed that the conveyance speed of the printing medium 2P during printing is V1, the distance from the point T to the discharge roller 22 is L1, and the conveyance speed of the discharge roller 22 during discharging (the speed after deceleration) is V3. Furthermore, as for the time from the start of deceleration of the discharge roller 22 to the passing of the upstream end of the printing medium 1P by the discharge roller 22, it is assumed that the number of times of scanning performed by the carriage 1 from the start of deceleration to the completion of discharge is S'. Furthermore, it is assumed that the time period required for one scanning is Ts, and the distance between the upstream end of the printing medium 1P and the downstream end of the printing medium 2P at the point in time where the upstream end of the preceding printing medium 1P reaches the discharge roller 22 is the predetermined distance Dp2. In this case, the distance Dp can be calculated as follows.

$$Dp = V1(L1/V3 - S' \cdot Ts) - L1 + Dp2$$

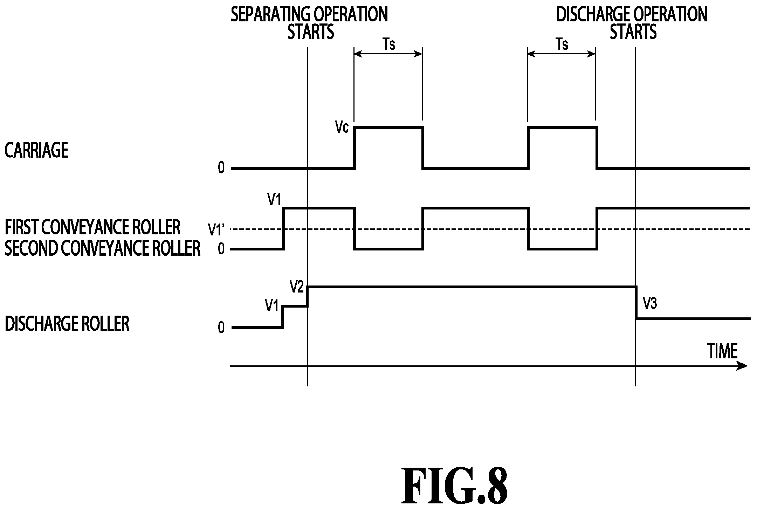

Note that Fig. 8 is a diagram illustrating the timing chart of the operations of the carriage 1, the first conveyance roller 5, the second conveyance roller 10, and the discharge roller 22 after the separating operation. The horizontal axis indicates time, and the vertical axis indicates conveyance speed or carriage driving speed. Here, the case where the number of times of scanning S calculated in S702 is 2 is illustrated. The time period Ts required for one scanning in the above formula is the time period required for the scanning operation of the carriage 1 as illustrated in the timing chart of Fig. 8. The time period Ts required for one scanning may include the standby time before and after the operation and acceleration/deceleration time. Further, if the time period required for a scanning operation of the carriage 1 differs from scan to scan, the time period Ts required for one scanning may be set to the average value thereof. Note that Vc in Fig. 8 is the driving speed of the carriage 1. In the diagram, V1 indicates the actual conveyance speed achieved by the first conveyance roller 5 and the second conveyance roller 10. On the other hand, V1' indicates the average conveyance speed under the assumption that the intermittent conveyance in the present embodiment is continuous conveyance. That is, V1' is a value obtained by averaging the conveyance speeds in the period during which the first conveyance roller 5 and the second conveyance roller 10 actually convey printing media at the conveyance speed V1 and the stop time (Ts) with the conveyance speed being 0 during which the printing media are stopped while the carriage moves.

Returning to the flowchart in Fig. 7, in S704, the MPU 201 calculates the separation allowable time period Tmax, which is the time period by the completion of separating of the preceding printing medium 1P and the following printing medium 2P. The separation allowable time period Tmax is calculated from the overlap amount W, the number of times of scanning S, the time period Ts required for one scanning, the distance L of the separation area, the distance Dp between printing paper after the separating operation, and the conveyance speed V1 of the following printing medium 2P, and is calculated as follows.

$$Tmax = (L - W - Dp)/V1 + S \cdot Ts$$

Thereafter, in S705, the MPU 201 calculates the conveyance speed V2 of the preceding printing medium 1P to be achieved during the separating operation. The conveyance speed V2 is calculated based on the separation allowable time period Tmax and the distance L of the separation area as follows.

$$V2 = L/Tmax$$

Note that the conveyance speed V2 is the conveyance speed of continuous conveyance achieved by the discharge roller 22 as illustrated in the timing chart of Fig. 8. Then, in S706, whether the upstream end of the preceding printing medium 1P has reached the second conveyance roller 10 is determined. In a case where it is determined that the upstream end of the preceding printing medium 1P has not reached the second conveyance roller 10 (NO), the process of S706 will be repeated. On the other hand, if it is determined that the upstream end of the preceding printing medium 1P has reached the second conveyance roller 10 (YES), the process will transition to S707.

In S707, the discharge roller 22 is rotated at a speed equal to or faster than the conveyance speed V2. Because of this operation, the preceding printing medium 1P is separated from the following printing medium 2P, as illustrated in Fig. 5B, and the overlap amount W is reduced to W'. At this time, by rotating at the conveyance speed V2 or faster, the printing paper interval of the distance Dp or more can be achieved by the time the upstream end of the preceding printing medium 1P reaches the point T where the separating is finished, thereby eliminating the overlapping state.

In S708, the MPU 201 determines whether or not the upstream end of the preceding printing medium 1P has reached the point T where the separating is finished. In a case where it is determined that the upstream end of the preceding printing medium 1P has not reached the point T (NO), the process of S708 will be repeated. On the other hand, if it is determined that the upstream end of the preceding printing medium 1P has reached the point T (YES), the process will transition to S709.

In S709, the MPU 201 determines whether or not the printing duty of the preceding printing medium 1P is higher than a threshold value (a predetermined printing duty). The printing duty to be set as the threshold value is stored in the ROM in advance in association with the paper type and environment. In a case where it is determined that the printing duty is lower than the threshold value (NO), the present process will end. On the other hand, in a case where it is determined that the printing duty is higher than the threshold value (YES), the process will transition to S710. Note that the threshold value of printing duty is calculated from the ink ejection volume within the printing area or a fixed grid of the entire paper surface. In a case where the printing duty is high, the amount of moisture contained in the printing medium is high and the printing medium is prone to curl. Therefore, if printing media with high printing duties are discharged at high speed, the alignment performance in discharging will deteriorate. Therefore, in the present embodiment, in a case where the printing duty for a printing medium to be discharged is higher than the threshold value, the conveyance speed achieved by the discharge roller is reduced from the speed V2 to the speed V3 for discharge.

As illustrated in Fig. 8, the conveyance speed V3 achieved by the discharge roller is slower than the conveyance speed V1 achieved by the first and second conveyance rollers in the present embodiment. However, there is not a limitation as such, and the conveyance speed V3 may be set to any speed slower than the conveyance speed V2.

In S710, the discharge roller 22 is rotated at the conveyance speed V3 in the present embodiment. Note that, as illustrated in the timing chart of Fig. 8, the conveyance speed is that of continuous conveyance, and the point in time where the discharge operation starts in Fig. 8 corresponds to the time the upstream end of the preceding printing medium 1P reaches the point T where the separating is finished. Because of this operation, the interval between the preceding printing medium 1P and the following printing medium 2P becomes narrower, and the distance Dp decreases to the distance Dp' as illustrated in Fig. 6B. However, as illustrated in Fig. 6C, because the distance Dp, which is calculated in S703, is secured at the point in time where the separating is completed, the predetermined distance Dp2 is secured as the interval between the printing medium 1P and the following printing medium 2P at the time the upstream end of the preceding printing medium 1P reaches the discharge roller 22.

The condition that must be satisfied by the predetermined distance Dp2 is Dp2>0, and, if this condition is satisfied, the following printing medium 2P is prevented from catching up with the preceding printing medium 1P.

Note that, for eliminating the overlapping state, the conveyance speed V2 of the downstream roller (in the present embodiment, the discharge roller 22) used for the separating operation is faster than the average conveyance speed V1' of the rollers (such as the second conveyance roller 10) on the upstream side relative to the separation area. However, depending on the calculation results of the conveyance speed V2 and the printing situation on the following printing medium 2P, the conveyance speed V2 does not necessarily need to be faster than the conveyance speed V1, but can be similar or slower. For example, even if the second conveyance roller 10 and the discharge roller 22 convey the printing media at the same conveyance speed V1, conveyance is not performed by the second conveyance roller 10 during printing on the printing medium 2P (during scanning by the carriage), and thus an intermittent conveyance operation is performed. Since the discharge roller 22 performs continuous conveyance on the other hand, even if the discharge roller 22 conveys the printing medium 1P at the same conveyance speed V1 as the second conveyance roller 10, the conveyance amount of the printing medium 1P conveyed by the discharge roller 22 may be substantially greater. Further, depending on the situation of printing performed on the printing medium 2P, such as in a case where the printing duty on the following printing medium 2P is high, it may be possible to separate the printing medium 1P and the following printing medium 2P even if the conveyance speed V2 is slower than the conveyance speed V1.

Further, the separating operation may be performed by changing the conveyance speed of the first conveyance roller 5 and the second conveyance roller 10 (to a lower speed) without changing the conveyance speed of the discharge roller 22.

Further, the downstream roller used for the separating operation (in the present embodiment, the discharge roller 22) does not have to be continuously driven at a constant speed equal to or faster than the conveyance speed V2, and, for example, it can be controlled so that the average speed including stops and acceleration/deceleration is equal to or faster than V2.

Note that, in the present embodiment, a serial-type printing apparatus that alternately performs a printing operation by the printing head 7 mounted on the carriage 1 and a conveyance operation to convey the printing media is taken as an example for the explanation. However, application to a full-line-type printing apparatus which conveys printing media to perform printing without moving a printing head is also possible. In such a case, in the calculation of the distance Dp, the number of times of scanning S' and the time period Ts required for one scanning may be calculated as 0.

Further, in the present embodiment, although whether or not to change the conveyance speed of the discharge roller 22 from the conveyance speed V2 to the conveyance speed V3 is determined according to the printing duty, there is not a limitation as such. The conveyance speed of the discharge roller 22 may be changed from the conveyance speed V2 to the conveyance speed V3 according to predetermined conditions such as the printing area for printing on the printing media, the ink ejection volume onto the printing media, the paper type of the printing media, and the operating environment of the printing apparatus, which contribute to the state of the printing media after printing. Further, multiple conditions such as the printing duty, the printing area for printing on the printing media, the ink application amount onto the printing media, the paper type of the printing media, and the operating environment of the printing apparatus may be combined as appropriate. Needless to say, the conveyance speed may be changed from V2 to V3 for all printing media without any conditions.

Note that although, to simplify the explanation, the case where printing is completed with two printing media is taken as an example for the explanation above, needless to say, printing can be performed on three or more printing media. In a case where printing is performed on the third printing medium, the conveyance control may be performed using the same steps as described above with the second printing medium being the preceding printing medium 1P and the third printing medium being the printing medium 2P.

In this way, the appropriate distance Dp at the completion of separating is set. Furthermore, in the separating operation, based on the distance Dp, the overlapping state of the printing medium 1P and the printing medium 2P is eliminated by adjusting the conveyance speed of the downstream roller conveying the preceding printing medium 1P and the conveyance speed of the upstream roller conveying the following printing media 2P. Thereafter, the conveyance speed of the downstream roller is decelerated. Accordingly, it is possible to improve the alignment performance for discharged sheets in a printing apparatus that performs overlapping conveyance.

(Second Embodiment)

Hereinafter, an explanation is given of the second embodiment of the present invention with reference to the drawings. Note that, since the basic configurations of the present embodiment are the same as those of the first embodiment, hereinafter an explanation is given of the characteristic configurations.

Although, in the first embodiment, the explanation is given of the case where the printing medium 1P and the printing medium 2P are separated by the two rollers, i.e., the second conveyance roller 10 and the discharge roller 22, it is also possible that another roller exists between the second conveyance roller 10 and the discharge roller 22.

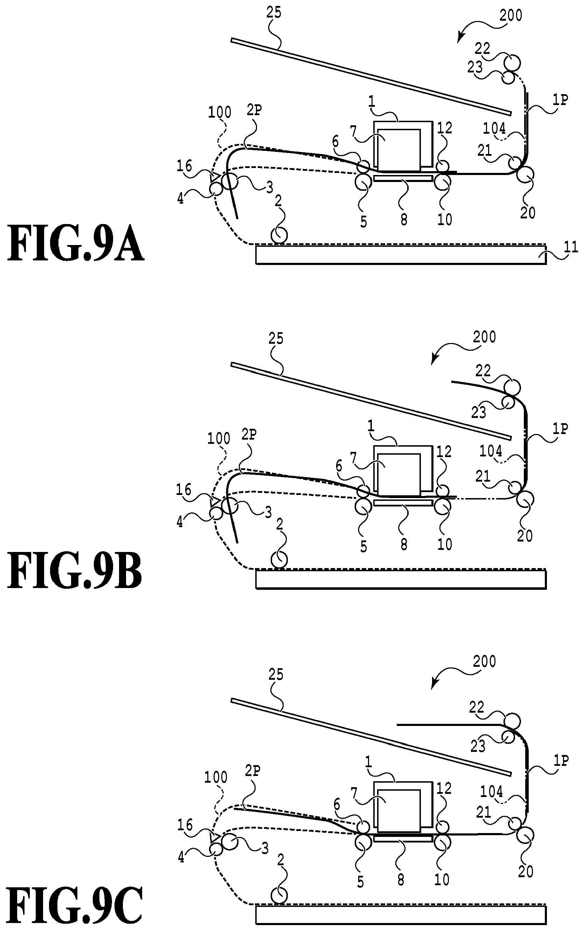

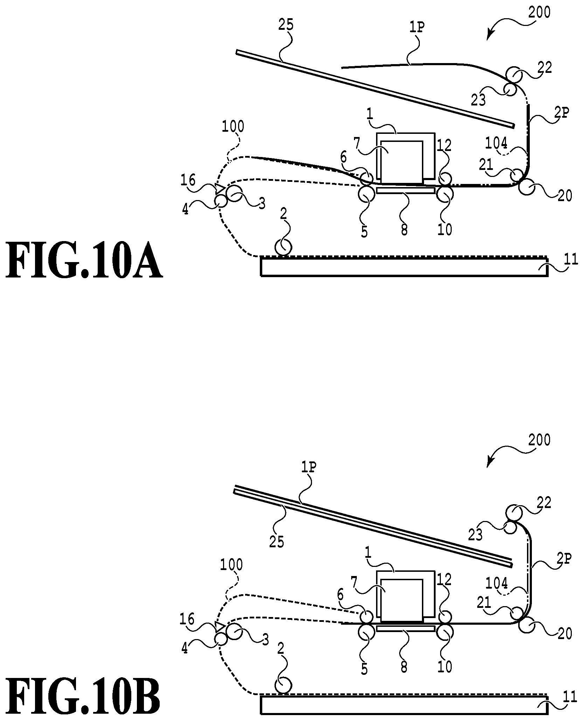

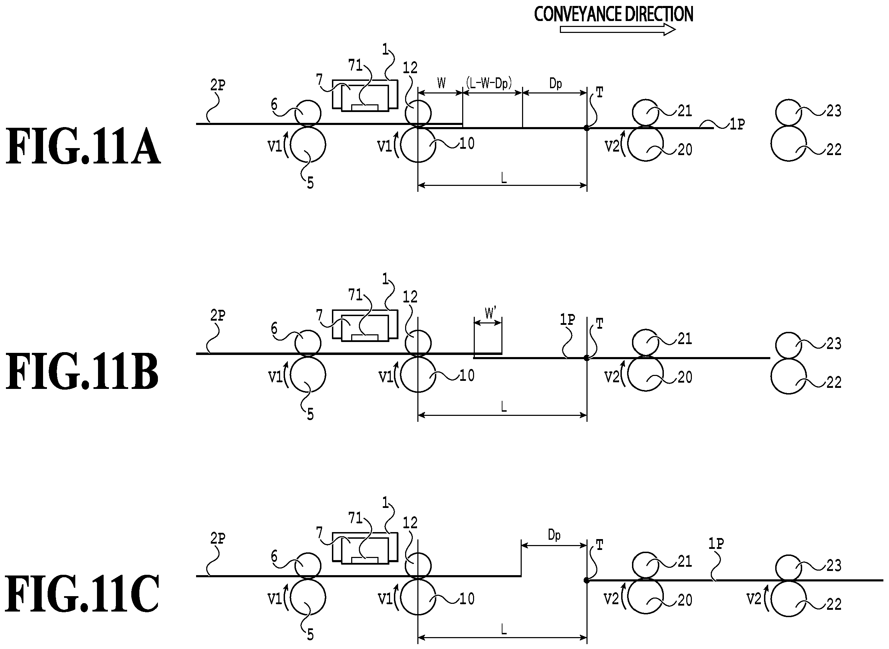

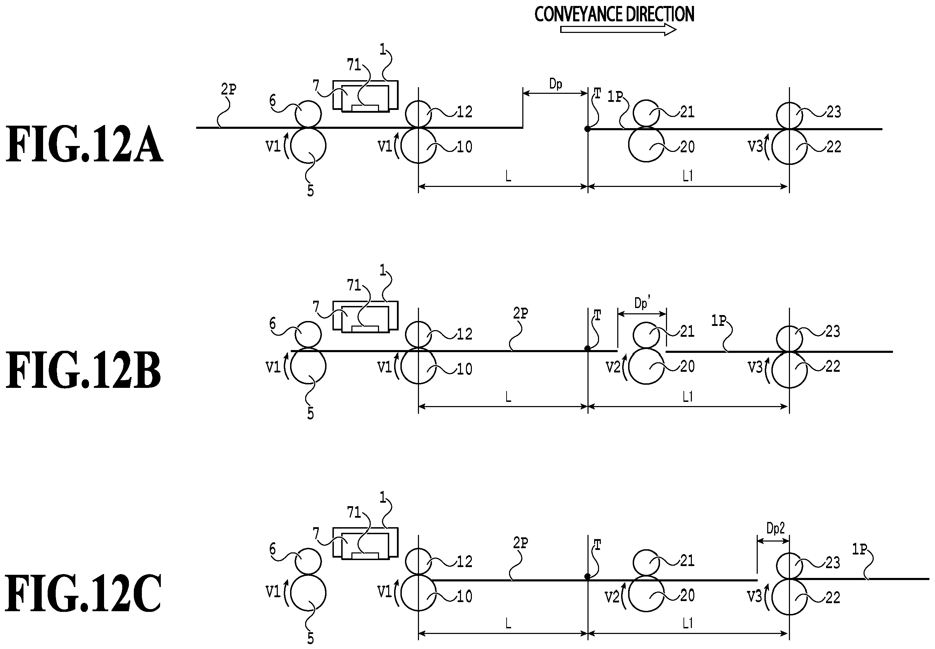

Fig. 9A to Fig. 9C and Fig. 10A and Fig. 10B are a series of diagrams illustrating the conveyance steps after the operation of separating the printing media P in the printing apparatus 200 of the present embodiment in step order. Further, Fig. 11A to Fig. 11C and Fig. 12A to Fig. 12C are a series of diagrams illustrating the conveyance steps after the operation of separating the printing media P in the printing apparatus 200 of the present embodiment in step order, and, for ease of understanding, the conveyance path of the printing media is illustrated as a straight line. Hereinafter, an explanation is given of the conveyance steps in the printing apparatus 200 of the present embodiment.

The third conveyance roller 20 is arranged between the second conveyance roller 10 and the discharge roller 22 and is driven by the conveyance motor 205 (see Fig. 2) serving as the driving source. In the present embodiment, the speed reduction ratio of the third conveyance roller 20 with respect to the conveyance motor 205 is configured to be a speed increasing system with respect to the second conveyance roller 10. Specifically, the speed reduction ratio is pre-adjusted so that, while the second conveyance roller 10 is rotating at the conveyance speed V1, the third conveyance roller 20 rotates at the conveyance speed V2 (V2>V1). Further, it is assumed that the third conveyance roller 20 is a one-way roller and is capable of idling in the conveyance direction. According to the present embodiment as above, even if the conveyance motor 205 continues the same manner of driving, the conveyance speed of a printing medium is switched from V1 to V2 at the timing where the printing medium comes off the nip part of the second conveyance roller. Note that the third conveyance driven roller 21 is biased to the third conveyance roller 20 and, together with the third conveyance roller 20, nips and conveys the printing medium P.

An explanation is herein given with reference to Fig. 9A. Fig. 9A illustrates the state where the separating operation explained in Fig. 7 is initiated. As in the first embodiment, the separating operation is initiated at the point in time where the upstream end of the preceding printing medium 1P passes through the nip part of the second conveyance roller 10. The preceding printing medium 1P that has passed through the nip part of the second conveyance roller 10 is conveyed by the third conveyance roller 20 toward the discharge roller 22. Further, the following printing medium 2P is fed from the printing paper loading part 11 and conveyed by the first conveyance roller 5 and the second conveyance roller 10.

An explanation is herein given with reference to Fig. 9B. Fig. 9B illustrates the state where the separating is completed and the distance Dp between the preceding printing medium 1P and the following printing medium 2P is secured. At this time, the preceding printing medium 1P is nipped by the third conveyance roller 20 and the discharge roller 22, and is conveyed at the conveyance speed V2.

An explanation is herein given with reference to Fig. 9B and Fig. 9C. Fig. 9B illustrates the timing where the separating is completed and the discharge roller 22 begins to reduce its conveyance speed from the speed V2 to the speed V3. Once the discharge roller 22 begins to reduce the conveyance speed, the preceding printing medium 1P is conveyed at the post-deceleration speed V3. At this time, the third conveyance roller 20 is a one-way roller and is brought around by the discharge roller 22. That is, the preceding printing medium 1P can be conveyed at the speed V3 without a large load. Then, once the preceding printing medium 1P passes by the third conveyance roller 20, the third conveyance roller 20 starts rotating at the speed V2 again. Thereafter, the preceding printing medium 1P is kept being conveyed by the discharge roller 22 at the conveyance speed V3 as in Fig. 10A, and is discharged to the tray 25 as in Fig. 10B.

This eliminates the overlap between the upstream end of the preceding printing medium 1P and the downstream end of the following printing medium 2P, and also prevents the following printing medium 2P from catching up with the printing medium 1P, allowing printing paper to be discharged at a reduced discharge speed to the tray 25 without the printing paper order being switched.

Fig. 11A to Fig. 11C are a series of diagrams illustrating the conveyance steps in the operation of separating the printing media P in the printing apparatus 200 of the present embodiment in step order. Fig. 12A to Fig. 12C are a series of diagrams illustrating the conveyance steps after the operation of separating the printing media P in the printing apparatus 200 of the present embodiment in step order. For ease of understanding, the conveyance path of the printing media is illustrated as a straight line. Hereinafter, an explanation is given of the conveyance steps in the printing apparatus 200 of the present embodiment.

Fig. 11A illustrates the state at the point in time where the printing on the preceding printing medium 1P ends and the upstream end of the preceding printing medium 1P has reached the second conveyance roller 10. At this point in time, the separating operation for the printing medium 1P and the printing medium 2P (hereinafter simply referred to as "separating operation") has not yet been initiated. Once the nip of the upstream end of the preceding printing medium 1P is released, the preceding printing medium 1P is conveyed by the third conveyance roller 20 at the speed V2 and the separating operation is initiated. That is, once the nip is released, the third conveyance roller 20 is no longer in the idling state, and the preceding printing medium 1P is conveyed by the third conveyance roller 20 at the speed V2. The separating operation is performed until the upstream end of the preceding printing medium 1P reaches the point T (the separation finishing point), which is a given predetermined position on the upstream side relative to the third conveyance roller 20. In the present embodiment, the point T is set within the section between the second conveyance roller 10 and the third conveyance roller 20.

Note that the area from the second conveyance roller 10 to the point T is the separation area, and the distance thereof is L. Further, the distance Dp (see Fig. 11C) is the interval between the upstream end of the preceding printing medium 1P and the downstream end of the following printing medium 2P at the time the upstream end of the preceding printing medium 1P reaches the point T, that is, immediately after the separating operation is completed. Further, the distance W is the distance from the second conveyance roller 10 to the downstream end of the following printing medium 2P at the time the upstream end of the preceding printing medium 1P reaches the second conveyance roller 10 (corresponding to Fig. 11A). This distance W is also the amount by which the printing medium 1P and the printing medium 2P overlap with each other (overlap amount) at the time the separating operation is initiated.

The preceding printing medium 1P is conveyed by the third conveyance roller 20 at the separation speed V2 until, as in Fig. 11A and Fig. 11B, the upstream end of the preceding printing medium 1P reaches the point T where the separating is finished after the separating operation is initiated. As in Fig. 11C, at the point in time where the separating is finished, the preceding printing medium 1P is nipped by the third conveyance roller 20 and the discharge roller 22, and is conveyed at the conveyance speed V2 up to this point. Further, as in Fig. 12A, the conveyance speed of the discharge roller 22 is reduced from V2 to V3 immediately after the upstream end of the preceding printing medium 1P reaches the point T where the separating is finished. Note that the timing for decelerating the conveyance speed is not limited to immediately after the upstream end of the preceding printing medium 1P reaches the point T, but can be any time after reaching it.

Once the upstream end of the preceding printing medium 1P reaches the point T where the separating is finished and the conveyance speed of the discharge roller 22 is reduced to V3, the interval between the preceding printing medium 1P and the following printing medium 2P shortens from the distance Dp to the distance Dp' as illustrated in Fig. 12B. The appropriate distance Dp is secured at the completion of the separating operation in Fig. 11C so that the predetermined distance Dp2 is secured as the interval between the printing medium 1P and the printing medium 2P at the time the upstream end of the preceding printing medium 1P reaches the discharge roller 22 as illustrated in Fig. 12C.

In this way, regarding a printing apparatus that performs overlapping conveyance, with a configuration in which a drive roller that can follow the rotation speeds of the second conveyance roller 10 and the discharge roller 22 is arranged between these rollers, it is also possible to improve the alignment performance for discharged sheets.

(Third Embodiment)

Hereinafter, an explanation is given of the third embodiment of the present invention with reference to the drawings. Note that, since the basic configurations of the present embodiment are the same as those of the first embodiment, hereinafter an explanation is given of the characteristic configurations.

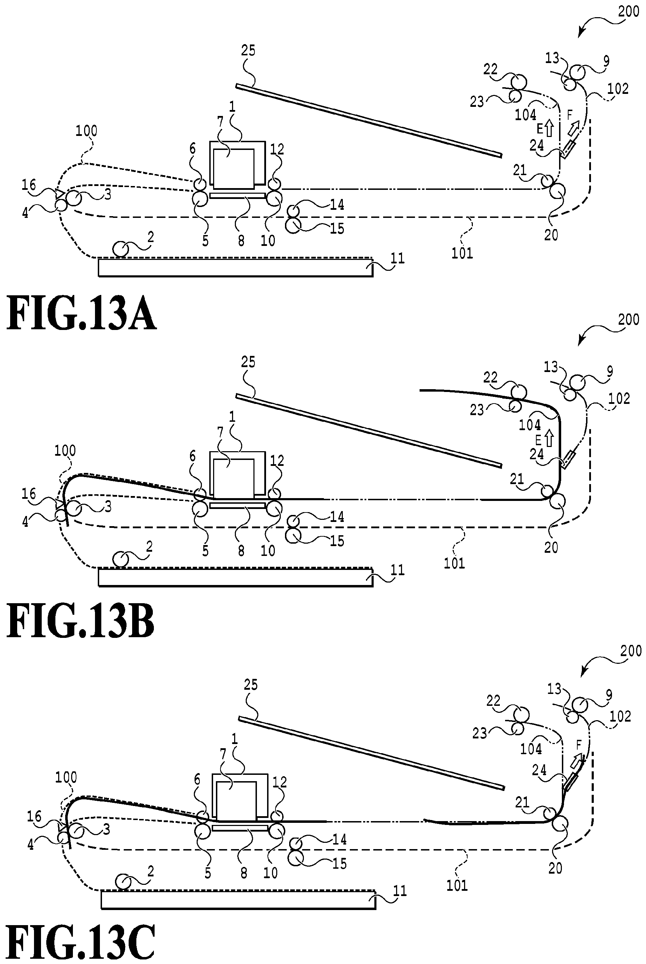

Fig. 13A to Fig. 13C are a series of diagrams illustrating the conveyance steps for the printing media P in the printing apparatus 200 of the present embodiment in step order. In the present embodiment, a branch is arranged between the third conveyance roller 20 and the discharge roller 22. A destination of the branch can be, for example, a double-sided reversal path for reversing the front and back sides of the conveyed printing media.

As illustrated in Fig. 13B, the preceding printing medium 1P can be conveyed to the discharge path 104 in the direction of the arrow E for discharge, or, as illustrated in Fig. 13C, the preceding printing medium 1P can be conveyed to the third conveyance path 102 by the flapper 24 in the direction of the arrow F. In the case where the destination of the branch is the double-sided reversal path, the printing medium conveyed to the third conveyance path 102 moves to a conveyance path not illustrated in the drawings and returns to the platen 8 with the side not being recorded facing the printing head 7. In the case of the path illustrated in Fig. 13C, a jam may occur during the conveyance to the third conveyance path 102. Therefore, the present configuration is configured to reduce the conveyance speed before the leading edge of the preceding printing medium 1P is conveyed to the flapper 24.

Note that, although the herein-described branch is used for a double-sided reversal pass as an example, the use of the branch is not particularly limited as such. It may be used for selective discharge to multiple trays prepared, for example.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A printing apparatus (200) comprising:

a printing part (1) configured to perform printing on printing media (P);
a first conveyance unit (5) configured to convey a first printing medium (1P) in a conveyance direction in an overlapping state in which a trailing end of the first printing medium (1P) and a leading end of a second printing medium (2P) that follows the first printing medium (1P) overlap with each other in the conveyance direction;
a second conveyance unit (10) arranged on a downstream side relative to the first conveyance unit (5) in the conveyance direction and configured to convey the first printing medium (1P) and the second printing medium (2P) on which printing has been done by the printing part (1); and
a control unit (201) configured to control the second conveyance unit (10) to convey the first printing medium (1P) at a first speed so as to eliminate the overlapping state, and then control the second conveyance unit (10) to convey the first printing medium (1P) at a second speed slower than the first speed.

2. The printing apparatus (200) according to claim 1, wherein the first conveyance unit (5) conveys the first printing medium (1P) that has been already in the overlapping state.

3. The printing apparatus (200) according to claim 1, wherein the first conveyance unit (5) performs conveyance by nipping the printing media using a first roller arranged on the downstream side relative to the printing part (1) in the conveyance direction.

4. The printing apparatus (200) according to claim 1,

wherein, after the trailing end of the first printing medium (1P) passes through the first conveyance unit (5), the overlapping state is eliminated by conveying the first printing medium at the first speed using the second conveyance unit (10), and
wherein the first speed is faster than a conveyance speed of the first conveyance unit (5) conveying the second printing medium (2P).

5. The printing apparatus (200) according to claim 1, wherein the control unit (201) changes a conveyance speed of the second conveyance unit (10) conveying the first printing medium (1P) from the first speed to the second speed at the time the trailing end of the first printing medium (1P) reaches a predetermined position on an upstream side relative to the second conveyance unit (10).

6. The printing apparatus (200) according to claim 5, wherein the control unit (201) switches whether or not to change the conveyance speed of the second conveyance unit (10) to be slower than the first speed, according to a predetermined condition contributing to a state of the first printing medium (1P) on which printing has been done.

7. The printing apparatus (200) according to claim 6, wherein the predetermined condition contributing to a state of the first printing medium (1P) on which printing has been done is a printing duty.

8. The printing apparatus (200) according to claim 6, wherein the predetermined condition contributing to a state of the first printing medium (1P) on which printing has been done is a paper type of the first printing medium (1P).

9. The printing apparatus (200) according to claim 1 comprising a tray to which the printing media (P) conveyed by the second conveyance unit (10) are discharged in a face-down manner.

10. The printing apparatus (200) according to claim 9, wherein the tray is arranged above the printing part (1).

11. The printing apparatus (200) according to claim 1 comprising
a third conveyance unit arranged between the first conveyance unit (5) and the second conveyance unit (10) and configured to convey the printing media (P).

12. The printing apparatus (200) according to claim 3,

wherein the second conveyance unit (10) performs conveyance and discharging by nipping the printing media (P) using a second roller arranged on the downstream side relative to the first roller in the conveyance direction, and
wherein, at the point in time where the upstream end of the first printing medium (1P) reaches a nip part of the second roller, the upstream end of the first printing medium (1P) is located on the downstream side relative to the downstream end of the second printing medium (2P) in the conveyance direction.

13. The printing apparatus (200) according to claim 1, wherein the conveyance speed at the time of discharging the first printing medium (1P) is slower than the conveyance speed of the first conveyance unit (5) conveying the first printing medium (1P) and the second printing medium (2P) at the time the printing part (1) performs printing on the first printing medium (1P).

14. The printing apparatus (200) according to claim 1,

wherein the printing apparatus (200) is a serial-type printing apparatus that alternately performs an operation of scanning in a direction intersecting the conveyance direction while the printing part (1) performs printing by ejecting ink onto the printing media and a conveyance operation in which the printing media are conveyed in the conveyance direction, and
wherein the conveyance speed at the time the printing part (1) performs printing on the first printing medium is an average conveyance speed under the assumption that the conveyance operation which is intermittent conveyance is continuous conveyance.

15. The printing apparatus (200) according to claim 1, wherein the printing apparatus (200) is a full-line-type printing apparatus in which the printing part (1) performs printing by ejecting ink onto the printing media continuously conveyed at a predetermined conveyance speed.

16. The printing apparatus (200) according to claim 12,

wherein the first conveyance unit (5) includes the first roller, a third roller arranged on the downstream side relative to the first roller and the upstream side relative to the second roller in the conveyance direction, and a driving source that drives the first roller and the third roller together, and

wherein the third roller is capable of conveying the printing media at a speed faster than the first roller.

17. The printing apparatus (200) according to claim 16, wherein a branch of a conveyance path is arranged between the second roller and the third roller.

18. A control method for a printing apparatus, the control method comprising:

a printing step for performing printing on printing media conveyed in a conveyance direction;

a first conveyance step for conveying the printing media using a first conveyance unit;

a second conveyance step for conveying a printing medium on which printing has been done in the printing step, using a second conveyance unit arranged on a downstream side relative to the first conveyance unit in the conveyance direction; and

a control step for controlling the first conveyance unit and the second conveyance unit to execute conveyance of a first printing medium and a second printing medium that follows the first printing medium,

wherein, in the control step, the first printing medium is conveyed by the second conveyance unit at a first speed so that a trailing end of the first printing medium and a leading end of the second printing medium are separated, and then the first printing medium is conveyed by the second conveyance unit at a second speed slower than the first speed.

19. A program for causing a computer to function as each unit of the printing apparatus (200) described in claim 1.

# FIG.1A

# FIG.1B

# FIG.1C

**FIG.2**

FIG.3A

FIG.3B

FIG.3C

# FIG.4A

# FIG.4B

FIG.5A

FIG.5B

FIG.5C

FIG.5D

EP 4 474 161 A1

EP 4 474 161 A1

CONVEYANCE DIRECTION

**FIG.6A**

**FIG.6B**

**FIG.6C**

## FIG.7

```
          SEPARATING OPERATION

               START

     ACQUIRING THE OVERLAP AMOUNT W          S701

  CALCULATING THE NUMBER OF TIMES OF SCANNING
  S PERFORMED DURING THE TIME FROM THE START
  TO THE END OF SEPARATING OF THE PRECEDING    S702
  RECORDING MEDIUM 1P, BASED ON THE RECORDING
  DATA OF THE FOLLOWING RECORDING MEDIUM 2P

  CALCULATING THE DISTANCE Dp THAT MAKES
  Dp2 A PREDETERMINED DISTANCE OR MORE          S703

  CALCULATING THE SEPARATION ALLOWABLE TIME
  PERIOD Tmax FROM THE OVERLAP AMOUNT W,
  THE NUMBER OF TIMES OF SCANNING S, THE TIME   S704
  PERIOD Ts REQUIRED FOR ONE SCANNING,
  THE DISTANCE L OF THE SEPARATION AREA,
  THE DISTANCE Dp, AND THE CONVEYANCE SPEED V1
  OF THE FOLLOWING RECORDING MEDIUM

  CALCULATING THE SPEED V2 FOR 1P FROM THE
  SEPARATION ALLOWABLE TIME PERIOD Tmax AND     S705
  THE DISTANCE L OF THE SEPARATION AREA
```

```
           HAS THE                            S706
  TRAILING END OF 1P PASSED          NO
  THROUGH THE ROLLER DOWNSTREAM IN THE
  CONVEYANCE DIRECTION USED FOR THE
  SEPARATING OPERATION ?

           YES

  ROTATING THE ROLLER DOWNSTREAM IN THE
  CONVEYANCE DIRECTION USED FOR THE           S707
  SEPARATING OPERATION AT A SPEED EQUAL
  TO OR FASTER THAN V2

           HAS THE                            S708
  TRAILING END OF THE PRECEDING       NO
  RECORDING MEDIUM 1P PASSED
  THROUGH THE POINT T ?

           YES

           BASED ON                           S709
  DETECTION OF THE PAPER TYPE AND     NO
  ENVIRONMENT, IS THE RECORDING
  DUTY HIGHER THAN THE
  THRESHOLD VALUE ?

           YES

  ROTATING THE                                S710
  DISCHARGE ROLLER AT THE SPEED OF V3

               END
```

FIG.8

FIG.9A

FIG.9B

FIG.9C

**FIG.10A**

**FIG.10B**

CONVEYANCE DIRECTION

**FIG.11A**

**FIG.11B**

**FIG.11C**

EP 4 474 161 A1

FIG.12A

FIG.12B

FIG.12C

CONVEYANCE DIRECTION

**FIG.13A**

**FIG.13B**

**FIG.13C**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/075395 A1 (MOORE STEVEN ROBERT [US]) 29 March 2012 (2012-03-29) * paragraph [0023] - paragraph [0032]; figure 3 * | 1-19 | INV. B41J13/00 B41J13/02 B65H29/12 G03G15/00 |
| A | US 2001/033050 A1 (KINOSHITA HIROKI [JP] ET AL) 25 October 2001 (2001-10-25) * figures 12A-12C * | 1-19 | ADD. B41J11/00 |
| A | US 2004/119224 A1 (OTSUKA NAOJI [JP]) 24 June 2004 (2004-06-24) * figures 6A-6E * | 1-19 | |
| A | US 2013/043639 A1 (TAKAYAMA YUJI [JP]) 21 February 2013 (2013-02-21) * paragraph [0006]; figures 5-9 * | 1-19 | |
| A | JP 2013 014090 A (CANON KK) 24 January 2013 (2013-01-24) * the whole document * | 1-19 | |

TECHNICAL FIELDS
SEARCHED      (IPC)

B41J
G03G
B65H

The present search report has been drawn up for all claims

| Place of search | Date of completion of the search | Examiner |
|---|---|---|
| The Hague | 22 October 2024 | Loi, Alberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 9465

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | | Publication date | Patent family member(s) | | Publication date |
|---|---|---|---|---|---|
| US 2012075395 | A1 | 29-03-2012 | DE 102011082472 | A1 | 30-07-2015 |
| | | | JP 5746592 | B2 | 08-07-2015 |
| | | | JP 2012066585 | A | 05-04-2012 |
| | | | US 2012075395 | A1 | 29-03-2012 |
| US 2001033050 | A1 | 25-10-2001 | NONE | | |
| US 2004119224 | A1 | 24-06-2004 | JP 3715842 | B2 | 16-11-2005 |
| | | | JP 2001039552 | A | 13-02-2001 |
| | | | US 6702274 | B1 | 09-03-2004 |
| | | | US 2004119224 | A1 | 24-06-2004 |
| US 2013043639 | A1 | 21-02-2013 | CN 102950916 | A | 06-03-2013 |
| | | | JP 5967879 | B2 | 10-08-2016 |
| | | | JP 2013040041 | A | 28-02-2013 |
| | | | US 2013043639 | A1 | 21-02-2013 |
| JP 2013014090 | A | 24-01-2013 | JP 5843502 | B2 | 13-01-2016 |
| | | | JP 2013014090 | A | 24-01-2013 |

EPO FORM P0459

For more details about this annex : see Official Journal of the European Patent Office, No. 12/82

## EP 4 474 161 A1

### REFERENCES CITED IN THE DESCRIPTION

**Patent documents cited in the description**

- JP H656299 A